# EUROPEAN PATENT SPECIFICATION

(11) **EP 2 575 488 B1**
(45) Date of publication and mention of the grant of the patent: **09.04.2014**
(21) Application number: 11721330.6
(22) Date of filing: 25.05.2011
(51) Int. Cl.: A23F 3/06

(54) **A PROCESS OF PREPARATION OF TEA**
VERFAHREN ZUR HERSTELLUNG VON TEE
PROCÉDÉ DE PRÉPARATION DE THÉ

(30) Priority: 20.07.2010 EP 10170119; 04.06.2010 IN MU17162010
(43) Date of publication of application: 10.04.2013
(73) Proprietor: Unilever NV, 3013 AL Rotterdam (NL); Unilever Plc., London, Greater London EC4Y 0DY (GB)
(72) Inventor: GUTTAPADU, Sreeramulu, Whitefield Bangalore 560 066 (IN); MAMTANI, Kuldeep, Balram, Nagpur 440 014 (IN); PALAGIRI, Swathy, Bangalore 560 066 (IN); PENDEM, Anjaneyulu, Bangalore 560 066 (IN); SAPLAY, Kishore, Madhukar, Mumbai 400 064 (IN); SINGH, Gurmeet, Bangalore 560 066 (IN); SINKAR, Vilas, Pandurang, Bangalore 560 066 (IN)
(74) Representative: Askew, Sarah Elizabeth
(86) International application number: PCT/EP2011/058552
(87) International publication number: WO 2011/151237

(56) References cited:
- US-A- 5 993 867
- US-A1- 2007 160 737
- DATABASE WPI Week 201023 Thomson Scientific, London, GB; AN 2009-Q87990 XP002612334, & KR 2009 109 679 A (UNIV MOKPO NAT IND ACAD COOP GROU) 21 October 2009 (2009-10-21)
- GUTH, H.; GROSCH, W.: "Identification of Potent Odourants in Static Headspace Samples of Green and Black Tea Powders on the Basis of Aroma Extract Dilution Analysis (AEDA)", FLAVOUR AND FRAGRANCE JOURNAL, vol. 8, 1993, pages 173-178, XP002612333,

## Description

### Technical Field

The present invention relates to process of preparation of tea. It particularly relates to processing of green tea or white tea.

### Background and prior art

Tea leaf is processed in various ways. Tea leaf may be subjected to a step of deactivation of enzymes, typically by firing, to obtain green tea. Tea leaf may be subjected to withering, comminution, and fermentation, followed by firing to obtain black tea. Oolong tea is obtained by a process similar to that of black tea except that fermentation is for relatively short time. The term fermentation as used in tea industry refers to an enzymatic oxidation process, typically carried out by exposing the comminuted tea leaf to air. Green leaf tea, black leaf tea and oolong leaf tea may be further subjected to extraction with hot water (typically at a temperature in the range of 70-100°C), separation of raffinate, and followed by drying of aqueous extract to obtain corresponding instant tea powders. Thus the tea is available in various forms including green tea, black tea, and oolong tea or corresponding instant tea powders. GABA tea, in particular Sen-cha tea is prepared by incubating plucked leaf under nitrogen and followed by pan firing at a temperature greater than 200°C or steaming at temperature greater than 100°C.

Green tea has several health benefits as it is rich in catechins. It is traditionally consumed mainly in China, Japan and Korea. White tea is a special kind of tea which is predominantly consumed in China. However, conventionally processed green or white tea typically has green, fishy, vegetable, burnt, cooked, and/or smoky aroma. Aroma of conventionally processed green or white tea is relatively poor in honey fruity and/or floral character. Secondly, the black tea and oolong tea have a distinct and relatively strong aroma as compared to green tea. Green tea is relatively less liked by non-traditional consumers of green tea as the green tea (and instant green tea) has relatively less aroma.

It is possible to blend black tea or oolong tea to green tea in order to improve aroma. However, such blending changes the taste and/or sensory profile of the end-cup.

Another way to improve aroma of green tea is to add-back the volatile aroma compounds recovered during processing of black tea. However, such add-back of aroma changes the aroma profile of the end-cup to that of black tea.

US5993867 (Freeze Dry Foods GmbH, 1999) discloses a process for producing a pulverized green tea comprising the steps of: (a) cooling the fresh green tea leaf, (b) dehydrating the cooled tea leaf simultaneously with step (a) or immediately after step (a), and (c) pulverizing cooled and dried green tea leaf under non-oxidizing conditions and (d) packing the dried green tea leaf wherein plucked tea leaf is subjected to obtain a powder and (d) packing the tea powder under non-oxidizing and water free conditions. The step (a) of cooling and the step of (b) of dehydrating is preferably carried out by freeze drying the tea leaf.

WO92/08366 (Premier Brands UK LTD.) relates to conditioning of comminuted particulate tea material and apparatus for storing tea under inert conditions.

US2007/0160737 (Unilever) describes a method of manufacturing a green tea product with enhanced aroma by a method comprising the steps of: (a) providing an aroma composition comprising at E-2-hexenal and linalool in a weight mass ratio of at least 0.7:1 and (b) combining the aroma composition with a green tea product. The aroma composition is preferably obtained from fresh tea leaf.

One of the objects of the present invention is to provide a green leaf tea that has relatively better organoleptic characteristics. Another object of the present invention is to provide green leaf tea having a relatively high floral and/or fruity and/or honey aroma.

Yet another object of the invention is to provide a process for preparation of green leaf tea having relatively higher aroma. A further object of the present invention is to provide a process of preparation of green leaf tea that has relatively better olfactory impact. Yet another object of the present invention is to provide a process for preparation of green leaf tea that retains relatively higher catechins. Another object of the present invention is to provide a process for preparation of green leaf tea that has a greener colour and/or has better leaf appearance. Another object of the present invention is to provide a process of preparation of green tea that is relatively free of unwanted notes such as burnt/cooked/ vegetable- like notes.

The present inventors have surprisingly found that green leaf tea obtained by a process involving a step of anaerobic incubation at specific temperature and for specific duration whilst avoiding certain steps provides end-cup aroma with specific aroma volatile compounds in specific mass ratios and consequently has an aroma with enhanced honey, floral and/or fruity notes and yet retains relatively high amount of catechins.

### Summary of the invention

According to one aspect of the present invention there is provided a green leaf tea characterized in that when 1 part of the tea is brewed in 100 parts of water at 100 °C for 5 minutes to form an infusion, the amounts of linalool, 1-octen-3-one, cis-3-hexen-1-ol measured in headspace of the infusion are such that
a. Mass ratio of linalool to 1-octen-3-one is greater than 50, and;
b. Mass ratio of linalool to cis-3-hexen-1-ol is greater than 10.

According to a second aspect of the present invention, there is provided a process for preparation of green leaf tea comprising the steps of:
a. taking a fresh tea leaf
b. incubating the plucked leaf at a temperature in the range 10 °C to 40 °C under anaerobic conditions for a period of 4-36 hours;
c. drying the incubated tea leaf to a moisture content less than 10% by total mass of the tea leaf to obtain the green leaf tea;
where the tea leaf is not exposed to aerobic conditions between the steps (b) and (c) for a period greater than 60 minutes, and there is no step of steaming or pan firing during the process.

According to a further preferred aspect, the product of the second aspect of the invention is obtainable by the process of the first aspect of the invention.

All parts and percentages are by weight unless indicated otherwise.

### Detailed Description of the invention

### The process

### The step (a): Fresh tea leaf

The step (a) comprises taking a fresh tea leaf. The fresh leaf may be plucked as two leaf and a bud, three leaf and a bud, or more than three leaf and a bud. The duration of time between the steps (a) and the step (b) is preferably less than 24 hours, more preferably less than 12 hours and most preferably less than 8 hours. However, it is possible that the duration of time between the step (a) and the step (b) is longer than 24 hours if the tea leaf is stored at temperature less than 5 °C.

### The step (b): Anaerobic incubation

The step (b) includes incubating the plucked leaf at a temperature in the range 10 °C to 40 °C under anaerobic conditions for a period of 4-36 hours. The term "anaerobic conditions" as used herein means that the gas phase in contact with the leaf has less than 3% oxygen by volume. Oxygen in the gas phase in contact with the leaf is preferably less than 2%, more preferably less than 1%. It is particularly preferred that the gas phase in contact with the leaf is substantially free of oxygen.

### Anaerobic conditions

Preferably, the anaerobic conditions in the step (b) are achieved by:
i. Placing the plucked tea leaf in a container, and closing the container, or;
ii. Placing the tea leaf in a container, purging a gas other than oxygen through the container, and closing the container

By placing the plucked leaf in a container and closing the container, the oxygen concentration in the gas phase decreases with time and anaerobic conditions are achieved after keeping the container closed for certain amount of time. The container is closed for duration preferably greater than about 3 hours, more preferably greater than 4 hours and most preferably greater than about 6 hours or even greater than about 8 hours.

Alternatively and more preferably, the anaerobic conditions are achieved by placing the leaf in a container, purging a gas other than oxygen through the container and closing the container. The gas other than oxygen is preferably nitrogen or carbon dioxide, more preferably nitrogen.

Once the container is closed in the step (b)(i) or(b)(ii) above, there is no particular restriction as to the pressure in the container. Pressure inside the closed container is preferably from 1-1000 mm Hg absolute (1.3 milibar-1.3 bar), more preferably 10-800 mm Hg absolute (13 milibar - 1 bar) and most preferably about 20.

It is preferred that the moisture loss from the leaf during the step (b) is as low as possible. This is advantageously and conveniently achieved by carrying out the step (b) under closed conditions. The incubated tea leaf after the step (b) comprises water in the range of preferably from 70 to 75% by weight.

### Incubation temperature

The step (b) is at a temperature in the range 10 °C to 40 °C, preferably in the range 15-35 °C, more preferably in the range 20-30 °C.

### Duration of anaerobic incubation

The plucked leaf is incubated under anaerobic conditions for a period of 4-36 hours, preferably for a period of 6-30 hours, more preferably for a period of 8-25 hours, most preferably for a period of 10-24 hours. It is particularly preferred that the period of anaerobic incubation is about 12-20 hours.

### The step (c): Drying the incubated leaf

During this step, the incubated tea leaf is dried to a moisture content preferably less than 10% by total mass of the tea leaf, more preferably less than 5 % by total mass of the tea leaf, to obtain the green leaf tea.

The step (c) is preferably carried out by thermal drying, freeze drying or vacuum drying.

Thermal drying is preferably carried contacting the leaf with air; with the temperature of air being preferably 50-150 °C, more preferably 60-110 °C, most preferably 70-100 °C. Thermal drying may be carried out in any conventional dryer. However, fluidized bed dryer or a tray dryer is particularly preferred for thermal drying.

According to one preferred aspect, the tea leaf may be dried by freeze drying. Typically the leaf is frozen to a temperature in the range of -20 to -200 °C followed by subjecting the leaf to drying under vacuum. The freeze drying may be carried out in any suitable freeze-drier.

According to another preferred aspect the step (c) is by vacuum drying. During vacuum drying the tea leaf is subjected to absolute pressure of preferably from 5 to 500 mm Hg (6.5 milibar-0.65 bar), more preferably from 50 to 300 mm Hg (65 milibar-0.4 bar), and most preferably from 100 to 200 mm Hg (0.13 milibar-0.26 bar). The vacuum drying may be carried out in any suitable vacuum drier, preferably in rotary vacuum drier. It is preferred that the vapours generated during vacuum drying are used to recover volatile aroma compounds. Aroma may be recovered by subjecting the vapours to a step of condensation / dehumidification to obtain a condensate rich in aroma volatiles. The condensate may be further concentrated to obtain an aroma concentrate. Alternatively the vapours generated during vacuum drying may be contacted with a solid substrate. The solid substrate may be a leaf tea, preferably white, green or black leaf tea, or may be an adsorbent.

### Avoidance of aerobic conditions between the steps (b) and (c)

The term "aerobic conditions" as used herein means that the gas phase in contact with the leaf has greater than or equal to 3% oxygen by volume.

The tea leaf is not exposed to aerobic conditions between the steps (b) and (c) for a period greater than 60 minutes. Exposure of tea leaf to aerobic conditions between the steps (b) and (c) is preferably less than 50 minutes, more preferably less than 40 minutes and most preferably less than 30 minutes. Without wishing to be limited by any theory, it is believed that if the leaf is exposed to aerobic conditions for more than an hour at temperature in the range of 0-50 °C between the steps (b) and (c), then tea loses green tea characteristics, in particular catechins.

### Avoidance of steaming or pan firing during the process

The term "steaming" as used herein means contacting the tea leaf with steam at a temperature of 100 °C or more for a period of 1 minute or more

The term "pan firing" as used herein means contacting the tea leaf with a hot surface which is at a temperature greater than 200 °C for a period of 5 minutes or more.

It is essential that there is no step of steaming or pan firing during the process.

### Avoidance of comminution step prior to step (b)

It is preferred that there is no step of comminution of tea leaf prior to step (b).

### Avoidance of extraction step prior to step (b)

It is preferred that there is no step of extraction of tea leaf prior to step (b). By extraction it is meant the step of contacting tea with aqueous or non-aqueous solvent.

### The green leaf tea product characteristics

The green leaf tea of the invention is characterized in that when 1 part of the tea is brewed in 100 parts of water at 100 °C for 5 minutes to form an infusion, the amounts of linalool, 1-octen-3-one, cis-3-hexen-1-ol measured in headspace of the infusion are such that
a. Mass ratio of linalool to 1-octen-3-one is greater than 50, and;
b. Mass ratio of linalool to cis-3-hexen-1-ol is greater than 10;

The green leaf tea of the invention has an aroma composition comprising linalool, 1-octen-3-one and cis-3-hexen-1-ol: wherein
a. Mass ratio of linalool to 1-octen-3-one is greater than 50, and;
b. Mass ratio of linalool to cis-3-hexen-1-ol is greater than 10.

The aroma composition is determined by brewing 1 part of the tea in 100 parts of water at 100 °C for 5 minutes to form an infusion and measuring the amounts of linalool, 1-octen-3-one, cis-3-hexen-1-ol measured in headspace of the infusion.

Mass ratio of linalool to 1-octen-3-one is greater than 50, preferably greater than 60, more preferably greater than 70, and most preferably greater than 100. There is no particular upper limit on the mass ratio of linalool to 1-octen-3-one. However the mass ratio of linalool to 1-octen-3-one is preferably less than 1000, more preferably less than 900, most preferably less than 600.

Mass ratio of linalool to cis-3-hexen-1-ol is greater than 10, preferably greater than 11, more preferably greater than 12. There is no particular upper limit on the mass ratio of linalool to cis-3-hexen-1-ol. However the mass ratio of linalool to cis-3-hexen-1-ol is preferably less than 100, more preferably less than 90, most preferably less than 60.

These mass ratios are found to be clearly distinct from the corresponding mass ratios as measured for conventional Gaba and green leaf teas. Mass ratio of linalool to 1-octen-3-one for various market samples of green leaf tea (Sencha Tsuji Rikyu® - Kataoka, Japan, Golden Tips® Pure Darjeeling - Golden Tips Tea Company Private Limited) and gaba tea (Under 120® - Yougiri, Japan, GABAron® - Yougiri, Japan) was measured and found to be in the range of 4-14 and 18-25, respectively. Similarly the mass ratio of linalool to cis-3-hexen-1-ol for the above samples of green leaf tea and gaba tea was measured and found to be in the range of 0.3-3 and 1-3, respectively.

In a preferred embodiment the present invention provides a green leaf tea produced by the process of the present invention. The green tea leaf produced by the process of the present invention comprises 5-30% catechins, preferably 5-20% of catechins and most preferably 5-15% of catechins by dry mass of green leaf tea.

In another preferred embodiment the present invention provides a tea infusion obtainable by brewing 1 part of tea leaf produced by the process of the present invention in 100 parts of water at 100°C for 5 minutes.

In a further preferred embodiment the present invention provides a tea aroma obtained from the headspace over the infusion characterized in that the aroma includes a,
a) Mass ratio of linalool to 1-octen-3-one is greater than 50, and;
b) Mass ratio of linalool to cis-3-hexen-1-ol is greater than 10.

The tea aroma further characterized in that the mass ratio of geraniol to 1-octen-3-one is greater than 10.

A green leaf tea as produced by the process of the present invention wherein the amount of total aroma volatiles in headspace over an infusion prepared by brewing 1 part of tea leaf in 100 parts of water at 100°C for 5 minutes per kilograms dry mass of tea leaf is greater than 1300 micrograms.

Without wishing to be limited by any theory it is believed that the green tea product with the above mass ratios provides relatively high honey/floral/fruity notes in the end-cup.

The mass of individual volatile compounds including linalool, geraniol, 1-octen-3-one, c-3-hexene-1-ol in the mass ratios refers to the amount of the respective individual compound in headspace of an infusion prepared by brewing 1 part of the tea in 100 parts of water at 100 °C for 5 minutes. Preferably the headspace analysis is carried out using SPME (solid phase micro-extraction) GC.

A person skilled in the art may measure obtain the total volatiles and/or individual volatiles per kg of the dry mass of the tea by any method. For example, SPME (solid phase micro-extraction) -GC analysis method described Wang et al (Food Chemistry, 109 (2008) 196-200) may be used with the difference being the brewing protocol.

Preferably, the total volatiles and individual volatile compounds are measured by using the following procedure:
(1) Weigh 0.3 g of green tea product in a Thermoflask
(2) Add 30 mL of distilled water at 100 °C
(3) Close the lid and wait for 5 minutes with occasional stirring.
(4) At the end of 5 minutes, filter the entire liquid and feed a 3 ml aliquot of the filtered liquid into a GC vial of 22 mL capacity
(5) Add 0.5gm of sodium chloride into the vial and magnetic bead. Seal the vial immediately.
(6) Incubate the vial in the dry heating bath with stirrer at 70°C for about 5 minutes
(7) Insert SPME (solid phase micro-extraction) fiber after 5 minutes and incubate with the fiber for 35 more minutes
(8)At the end of 40 min, remove the SPME (solid phase micro-extraction) fiber and inject into the GC-FID. (Desorption time of 5 min)

### GC Conditions

Column = Cpwax (30m X0.25mm ) Inject Port temp = 230°C Detector temp = 250°C Carrier gas flow = 1.3ml/min (He) Split ratio = 10: 1 Oven ramp = initial 45°C hold for 2 min, 6°C/min to 160°C hold for 0 min, 10°C/min to 230°C hold for 5 min

The green leaf tea comprises preferably 5-30%, more preferably 10-25% and most preferably 12-23% catechins by dry mass of green tea.

The invention will now be demonstrated with help of examples. The examples are for illustration only and do not limit the scope of the invention in any manner

### Examples

### Measurement Protocols

### Measurement of mass ratios of aroma marker compounds

Following procedure was used to obtain amounts of linalool, geraniol, 1-octene-3-one and cis-3-hexen-ol. The amounts of these compounds are expressed as micrograms per kg dry mass of the tea leaf unless specified otherwise. The mass ratios are calculated from the amounts.

### Procedure

(1) Weigh 0.3 g of green tea product in a Thermoflask
(2) Add 30 mL of distilled water at 100 °C
(3) Close the lid and wait for 5 minutes with occasional stirring.
(4) At the end of 5 minutes, filter the entire liquid and feed a 3 ml aliquot of the filtered liquid into headspace GC vial of 22 mL capacity
(5) Add 0.5gm of sodium chloride into the vial and magnetic bead. Seal the vial immediately.
(6) Incubate the vial in the dry heating bath with stirrer at 70°C for about 5 minutes
(7) Insert SPME (solid phase micro-extraction) fiber after 5 minutes and incubate with the fiber for 35 more minutes
(8)At the end of 40 min, remove the SPME(solid phase micro-extraction) fiber and inject into the GC-FID. (Desorption time of 5 min)

### GC Conditions

Column = Cpwax (30m X0.25mm ) Inject Port temp = 230°C Detector temp = 250°C Carrier gas flow = 1.3ml/min (He) Split ratio = 10: 1 Oven ramp = initial 45°C hold for 2 min, 6°C/min to 160°C hold for 0 min, 10°C/min to 230°C hold for 5 min

### Aroma evaluation in end-cup

1 gram of green leaf tea product was infused in 100 mL of hot water at 100 °C for 1.5 min. The infusion was stirred 3 times (clockwise direction) and then strained through a strainer. The end cups of the teas made were evaluated by a flavour expert subjectively. In particular the evaluation was for floral, honey character and also for any undesirable characteristics such as smoly/burnt, raw green, or cooked.

### Effect of temperature of anaerobic incubation

Tea leaf used for experimentation was plucked from Devershola plantations, a South Indian tea estate in Tamilnadu, India. 0.5 kg of tea leaf with moisture content of 75% was placed in a 10 litre air tight cylindrical glass chamber. Anaerobic environment was created by flushing 100% v/v nitrogen for 2-3 minutes through the chamber. After flushing, the chamber was immediately sealed and kept at a temperature of 4 °C. The percentage volume of oxygen in the headspace after 18 hrs was measured using a handheld gas analyzer (Checkpoint PBI Dansensor) and was found to be less than 2%. After 18 hours of incubation, the incubated leaf was taken out of the chamber and then dried to a moisture content of less than 10% by subjecting the leaf material to thermal drying at 80° C in a tray dryer to obtain green leaf tea product. Similar procedure was repeated for experiments done at different incubation temperatures and the results are tabulated below.

**Table 1: Effect of temperature of anaerobic incubation**

| T (°C) | 1-o-3-o | Lina | Gera | c-3-H | Lina/ 1-o-3-o | Lina/ c-3-H | End-cup aroma |
|---|---|---|---|---|---|---|---|
| 4 | 8.9 | 280 | 68 | 20 | 32 | 14 | No honey floral or fruity character |
| 11 | 7.5 | 388 | 148 | 33 | 52 | 12 | Mild honey and floral |
| 23 | 7.4 | 456 | 336 | 41 | 62 | 11 | High honey and floral |
| 35 | 12.0 | 712 | 323 | 35 | 60 | 20 | High honey and floral |
| 45 | 14.5 | 625 | 261 | 25 | 43 | 25 | Smoky burnt |

| | | | | | | | |
|---|---|---|---|---|---|---|---|
| (1-o-3-o: 1-octen-3-one, Lina: Linalool, Gera: Geraniol, C-3-H: cis-3-hexen-1-ol) | | | | | | | |

It can be seen from the table above that anaerobic incubation at temperatures in the range 10-40 °C give honey floral character in the end cup. Incubation temperature above 40 ° C give burnt smoky character whereas for incubation temperature below 10° C, the end cups give no or very little honey floral character in the end cup.

### Effect of duration of anaerobic incubation

Two shoots of fresh tea leaf (approximately 4 grams and moisture content =75%) plucked from South Indian Gardens, Tamilnadu, India, were put in a GC vial (22 mL capacity). Nitrogen gas (100 % V/V) at a flow rate of 20 liters per minute was flushed for 1 minute through the vial and the vial was immediately crimped. The vial was maintained at temperature of 25 °C for 4 hours. The vial was placed in GC and HSGC peak areas of linalool were determined. The procedure was repeated as a function of incubation time as tabulated.

### Model-Perkin Elmer AutoSystem XL

### GC column conditions

| | |
|---|---|
| Column type | CP wax 52 CB (30 m x 0.25 mm id, 0.15 micron) |
| Column initial temperature | 35 °C |
| Hold time | 2 min |
| Ramp | 10 °C/min |
| Column final temperature | 230 °C |
| Injector temperature | 230 °C |
| Detector temperature | 250 °C |
| Carrier gas | Helium |
| Carrier gas pressure | 13.6 psi |
| Split ratio | 10:1 |

### Headspace conditions

| | |
|---|---|
| Oven temperature | 75 °C |
| Needle temperature | 100 °C |
| Transfer temperature | 110 °C |
| Thermostating time | 30 min |
| Pressurizing time | 3 min |
| Injection volume | 4.5 ml |
| Withdrawl time | 0.5 min |

The results are tabulated below:

**Table 2: Effect of duration of anaerobic incubation**

| Duration | Linalool (HSGC peak area) |
|---|---|
| 4 hours | 23789 |
| 6 hours | 28948 |
| 10 hours | 83385 |
| 14 hours | 124550 |
| 18 hours | 129380 |
| 20 hours | 112000 |

It is evident that 6-20 hours of anaerobic incubation, in particular about 10-18 hours of anaerobic incubation provides relatively higher linalool contents

### Effect of aerobic incubation/withering

Tea leaf used for experimentation was plucked from Devershola plantations, a South Indian tea estate in Gudalur, Tamilnadu.

For anaerobic incubation, 0.5 kg of tea leaf with a moisture content of 75% was placed in a 10 litre air tight cylindrical glass chamber. Anaerobic environment was created by flushing 100% v/v nitrogen for 2-3 minutes through the chamber. The chamber was then immediately sealed and kept at a temperature of 23 °C. The percentage volume of oxygen in the headspace after 18 hrs was measured using a handheld gas analyzer (Checkpoint PBI Dansensor) and was found to be less than 2%. After 18 hours of incubation, the leaf material was taken out of the chamber and then dried to a moisture content of less than 10% by subjecting the leaf material to thermal drying at 80° C in an ordinary tray dryer.

For aerobic withering, the leaf material was put in a withering trough (4.5 ft long, 2.25 ft wide and 2.25 ft deep) at the loading rate of 15 kg/m². Depth of the leaf bed in the withering trough was 0.5 ft. The air was blown through the leaf bed for 18 hrs using a blower (5 hp, 1440 rpm).The aerobically withered leaf with a moisture content of 65% to 70% was then dried to a moisture content less than 10% by subjecting the leaf material to thermal drying at 80° C in an ordinary tray dryer.

For no withering, 0.5 kg of fresh leaf moisture with a moisture content of 75% to 77% was dried to a moisture content of less than 10% by subjecting the leaf material to thermal drying at 80° C in an ordinary tray dryer.

The results are tabulated below

**Table 3: Effect of incubation conditions**

| Incubation | 1-o-3-o | Lina | Gera | c-3-H | Lina/ 1-o-3-o | Lina/ c-3 h | End-cup aroma |
|---|---|---|---|---|---|---|---|
| Anaerobic (T= 23°C | 5.2 | 974 | 79 | 69 | 188 | 14 | Intense Honey and Floral |
| Aerobic (T = 23°C) | 8.5 | 844 | 40 | 255 | 99 | 3 | Fresh green, mild floral, no honey |
| No incubation | 6.7 | 454 | 20 | 170 | 68 | 3 | Raw green, slightly roasted, no floral/honey |

It can be seen from the table above that tea made by no withering give raw green and slightly roasted character in the end cup. It can also be shown that anaerobic incubation give teas with an enhanced floral fruity and/or honey character as compared to teas made by aerobic incubation/withering.

### Effect of tray drying vs freeze drying

The experiments were carried out in the same manner as those listed in Table 1 with one experiment differing in that the step (c) was carried out by freeze drying in a Freeze Dryer (Allied Frost)

**Table 4: Effect of tray drying vs freeze drying**

| Final drying | 1-0-3-o | Lina | gera | c-3-H | Total aroma | Lina/ 1-o-3-o | Lina / c-3-h | Leaf Colour | Catechins (%) | End-cup aroma score |
|---|---|---|---|---|---|---|---|---|---|---|
| Tray drying | 5.2 | 974 | 79 | 69. | 1865 | 188 | 14 | Not green | 6.5 | Intense honey and floral |
| Freeze drying | 4.6 | 1734 | 50 | 125 | 4982 | 373 | 14 | Green | 13 | Intense fruity and floral, mild honey |

It can be seen from the table above that the process where the step (c) is by freeze drying provides tea with relatively high total aroma, allows higher retention of catechins and provides better leaf appearance as compared to the process where the step (c) is by tray drying. Teas made by anaerobic incubation followed by freeze drying are have an intense fruity floral character as compared to teas with a intense honey floral character given by anaerobic incubation followed by tray drying.

### Anaerobic conditions achieved by sealing the container

0.5 kg of tea leaf with a moisture content of 75% was placed in a 10 litre air tight cylindrical glass chamber. The chamber was then immediately sealed and kept at a temperature of 23 °C. The vol% of oxygen in the headspace after 9 hrs was measured using a handheld gas analyzer (Checkpoint PBI Dansensor) and was found to be less than 2%. The leaf material was taken out of the chamber after 18 hrs and then immediately dried to a moisture content of less than 10% by subjecting the leaf material to freeze drying. In effect, this process is equivalent to exposing the tea leaf to anaerobic conditions for about 9 hours. The results are tabulated below

**Table 5: Anaerobic conditions achieved by sealing the container**

| 1-o-3-o | Lina | gera | c-3-H | Total aroma | Lina/1-o-3-o | Lina/ c-3h | End-cup aroma |
|---|---|---|---|---|---|---|---|
| 3.7 | 1402 | 41 | 123.3 | 4156 | 381 | 11 | High fruity and floral |

It can be seen from the table above that teas made by placing the leaf material in a closed chamber followed by freeze drying also gives a fruity floral character It can be seen that the anaerobic conditions in the step (b) can also be achieved by keeping the leaf in a closed container. However, the total processing time required for such a process is high as it takes some time (9 hours in closed conditions) to achieve anaerobic conditions.

## Claims

1. A green leaf tea **characterized in that** when 1 part of the tea is brewed in 100 parts of water at 100 °C for 5 minutes to form an infusion, the amounts of linalool, 1-octen-3-one, cis-3-hexen-1-ol measured in headspace of the infusion are such that
a. Mass ratio of linalool to 1-octen-3-one is greater than 50, and;
b. Mass ratio of linalool to cis-3-hexen-1-ol is greater than 10.

2. A green leaf tea as claimed in claim 1 comprising 5-30% catechins by dry mass of green leaf tea.

3. A green leaf tea as claimed in claim 1 or 2 **characterized in that** the mass ratio of geraniol to 1-octen-3-one is greater than 10 wherein the amount of geraniol and 1-octene-3one are measured in headspace of an infusion prepared by brewing 1 part of the tea in 100 parts of water at 100 °C for 5 minutes.

4. A green leaf tea as claimed in any one of the preceding claims wherein the amount of total aroma volatiles in headspace of an infusion prepared by brewing 1 part of the tea in 100 parts of water at 100 °C for 5 minutes per kg dry mass of tea leaf is greater than 1300 micrograms.

5. A process of preparation of green leaf tea comprising the steps of:
a. taking a fresh tea leaf;
b. incubating the plucked leaf at a temperature in the range 10 °C to 40 °C under anaerobic conditions for a period of 4-36 hours;
c. drying the incubated tea leaf to a moisture content less than 10% by total mass of the tea leaf to obtain the green leaf tea;
where the tea leaf is not exposed to aerobic conditions between the steps (b) and (c) for a period greater than 60 minutes, and there is no step of steaming or pan firing during the process.

6. A process of preparation of green leaf tea as claimed in claim 5 wherein anaerobic conditions in the step (b) are achieved by:
i. Placing the plucked tea leaf in a container, and closing the container, or;
ii. Placing the tea leaf in a container, purging a gas other that oxygen through the container, and closing the container.

7. A process of preparation of green leaf tea as claimed in claim 5 or claim 6 wherein there is no step of comminution of tea leaf prior to step (b).

8. A process of preparation of green leaf tea as claimed in claims 5, 6 or 7 wherein there is no step extraction of tea leaf prior to step (b).

9. A process of preparation of green leaf tea as claimed in any one of the preceding claims 5-8 wherein the step (c) is carried out either by thermal drying, freeze drying or vacuum drying.

10. A process of preparation of green leaf tea as claimed in claim 9 wherein the step (c) is by freeze drying.

11. A process of preparation of green leaf tea as claimed in claim 9 wherein the step (c) is by vacuum drying.

12. A process of preparation of green leaf tea as claimed in any one of the preceding claims 9-11 wherein vapours generated during the vacuum drying are used to recover volatile aroma compounds.

13. A green leaf tea according to any one of claims 1-4, obtainable by a process according to any one of claims 5-12.

## Patentansprüche

1. Grüner Blatttee,
**dadurch gekennzeichnet, dass** beim Aufbrühen von 1 Teil Tee für 5 Minuten in 100 Teilen Wasser mit 100 °C, um einen Aufguss zu erzeugen, die Mengen an Linalool, 1-Octen-3-on, cis-3-Hexen-1-ol, die im Kopfraum des Aufgusses gemessen werden, derart sind, dass
a. das Massenverhältnis zwischen Linalool und 1-Octen-3-on mehr als 50 beträgt; und
b. das Massenverhältnis zwischen Linalool und cis-3-Hexen-1-ol mehr als 10 beträgt.

2. Grüner Blatttee nach Anspruch 1,
der 5 bis 30 % Catechine aufweist, und zwar auf die Trockenmasse des Grünen Blatttees bezogen.

3. Grüner Blatttee nach Anspruch 1 oder 2,
**dadurch gekennzeichnet, dass** das Massenverhältnis zwischen Geraniol und 1-Octen-3-on mehr als 10 beträgt, wobei die Mengen von Geraniol und 1-Octen-3-on im Kopfraum eines Aufgusses gemessen werden, der durch Aufbrühen von 1 Teil Tee für 5 Minuten in 100 Teilen Wasser mit 100 °C hergestellt wird.

4. Grüner Blatttee nach einem der vorstehenden Ansprüche,
wobei die Menge der gesamten flüchtigen Aromaverbindungen im Kopfraum eines Aufgusses, der durch Aufbrühen von 1 Teil Tee für 5 Minuten in 100 Teilen Wasser mit 100 °C hergestellt wird, pro kg Trockenmasse der Teeblätter mehr als 1300 µg beträgt.

5. Verfahren zum Herstellen von Grünem Blatttee,
das die folgenden Schritte aufweist:
a. Entnehmen von frischen Teeblättern;
b. Inkubieren der gepflückten Blätter bei einer Temperatur im Bereich von 10 bis 40 °C unter anaeroben Bedingungen für einen Zeitraum von 4 bis 36 Stunden;
c. Trocken der inkubierten Teeblätter bis zu einem Feuchtigkeitsgehalt von weniger als 10 %, und zwar auf die Gesamtmasse der Teeblätter bezogen, um den Grünen Blatttee zu erhalten;
wobei die Teeblätter zwischen den Schritten (b) und (c) für einen Zeitraum von mehr als 60 Minuten keinen aeroben Bedingungen ausgesetzt werden und es während des Verfahrens keinen Schritt der Dampfbehandlung oder des Erhitzens in einer Schale gibt.

6. Verfahren zum Herstellen von Grünem Blatttee nach Anspruch 5,
wobei die anaeroben Bedingungen im Schritt (b) wie folgt erreicht werden:
i. die gepflückten Teeblätter werden in einen Behälter gegeben und der Behälter wird verschlossen oder;
ii. die Teeblätter werden in einen Behälter gegeben, der Behälter wird mit einem von Sauerstoff verschiedenen Gas gespült und der Behälter wird verschlossen.

7. Verfahren zum Herstellen von Grünem Blatttee nach Anspruch 5 oder 6, wobei es vor dem Schritt (b) keinen Schritt des Zerkleinerns der Teeblätter gibt.

8. Verfahren zum Herstellen von Grünem Blatttee nach Anspruch 5, 6 oder 7, wobei es vor dem Schritt (b) keinen Schritt des Extrahierens der Teeblätter gibt.

9. Verfahren zum Herstellen von Grünem Blatttee nach einem der vorstehenden Ansprüche 5 bis 8,
wobei der Schritt (c) entweder durch Trocknen mittels Wärme, Gefriertrocknen oder Vakuumtrocknen durchgeführt wird.

10. Verfahren zum Herstellen von Grünem Blatttee nach Anspruch 9,
wobei der Schritt (c) das Gefriertrocknen ist.

11. Verfahren zum Herstellen von Grünem Blatttee nach Anspruch 9,
wobei der Schritt (c) das Vakuumtrocknen ist.

12. Verfahren zum Herstellen von Grünem Blatttee nach einem der vorstehenden Ansprüche 9 bis 11,
wobei die beim Vakuumtrocknen erzeugten Dämpfe verwendet werden, um flüchtige Aromaverbindungen zu gewinnen.

13. Grüner Blatttee nach einem der Ansprüche 1 bis 4,
der nach einem Verfahren nach einem der Ansprüche 5 bis 12 erhalten werden kann.

## Revendications

1. Thé vert en feuilles **caractérisé en ce que**, quand 1 partie de thé est infusé dans 100 parties d'eau à 100°C pendant 5 minutes pour obtenir une infusion, les quantités de linalol, de 1-octén-3-one, de cis-3-hexén-1-ol mesurées dans l'espace de tête de l'infusion sont telles que
a. le rapport en poids du linalol à la 1-octén-3-one est supérieur à 50 ; et
b. le rapport en poids du linalol au cis-3-hexén-1-ol est supérieur à 10.

2. Thé vert en feuilles selon la revendication 1 comprenant de 5 à 30 % de catéchines en poids sec de thé vert en feuilles.

3. Thé vert en feuilles selon la revendication 1 ou 2 **caractérisé en ce que** le rapport en poids du géraniol à la 1-octén-3-one est supérieur à 10, la quantité de géraniol et de 1-octén-3-one étant mesurée dans l'espace de tête d'une infusion préparée en infusant 1 partie de thé dans 100 parties d'eau à 100°C pendant 5 minutes.

4. Thé vert en feuilles selon l'une quelconque des revendications précédentes dans lequel la quantité d'arômes volatils totaux dans l'espace de tête d'une infusion préparée en infusant 1 partie de thé dans 100 parties d'eau à 100°C pendant 5 minutes par kg en poids sec de feuilles de thé est supérieure à 1300 microgrammes.

5. Procédé de préparation de thé vert en feuilles comprenant les étapes suivantes :
a. cueillir des feuilles fraîches de thé ;
b. incuber les feuilles cueillies à une température dans la plage de 10 à 40°C dans des conditions anaérobies pendant une période de 4 à 36 heures ;
c. sécher les feuilles de thé incubées jusqu'à obtention d'une teneur en humidité inférieure à 10 % du poids total des feuilles de thé pour obtenir le thé vert en feuilles ;
dans lequel les feuilles de thé ne sont pas exposées à des conditions aérobies entre les étapes (b) et (c) pendant une période supérieure à 60 minutes, et le procédé ne comporte aucune étape de cuisson à la vapeur ou de poêlage.

6. Procédé de préparation de thé vert en feuilles selon la revendication 5 dans lequel les conditions anaérobies de l'étape (b) sont obtenues comme suit :
i. placer les feuilles de thé cueillies dans un récipient, et fermer le récipient ; ou
ii. placer les feuilles de thé dans un récipient, purger un gaz autre que l'oxygène à travers le récipient, et fermer le récipient.

7. Procédé de préparation de thé vert en feuilles selon la revendication 5 ou la revendication 6 dans lequel il n'y a pas d'étape de broyage des feuilles de thé avant l'étape (b).

8. Procédé de préparation de thé vert en feuilles selon les revendications 5, 6 ou 7 dans lequel il n'y a pas d'étape d'extraction des feuilles de thé avant l'étape (b).

9. Procédé de préparation de thé vert en feuilles selon l'une quelconque des revendications 5 - 8 précédentes dans lequel l'étape (c) est mise en oeuvre soit par séchage thermique, soit par lyophilisation, soit par séchage sous vide.

10. Procédé de préparation de thé vert en feuilles selon la revendication 9 dans lequel l'étape (c) est mise en oeuvre par lyophilisation.

11. Procédé de préparation de thé vert en feuilles selon la revendication 9 dans lequel l'étape (c) est mise en oeuvre par séchage sous vide.

12. Procédé de préparation de thé vert en feuilles selon l'une quelconque des revendications 9 - 11 précédentes dans lequel les vapeurs générées lors du séchage sous vide sont utilisées pour récupérer les composés aromatiques volatils.

13. Thé vert en feuilles selon l'une quelconque des revendications 1 à 4, susceptible d'être obtenu par un procédé selon l'une quelconque des revendications 5 à 12.
